# EUROPÄISCHE PATENTANMELDUNG

(11) **EP 3 698 905 A1**
(43) Veröffentlichungstag der Anmeldung: **26.08.2020**
(21) Anmeldenummer: 20000029.7
(22) Anmeldetag: 04.04.2011
(51) Int. Cl.: B23B 29/02, B23P 15/28, B29C 70/02, B29C 70/46

(54) **SCHNEIDWERKZEUG ZUM MASCHINELLEN BOHREN ODER DREHEN**

(30) Priorität: 15.04.2010 DE 102010015229
(62) Teilanmeldung aus: 11002783.6
(71) Anmelder: Leichtbau-Zentrum Sachsen GmbH, 01307 Dresden (DE)
(72) Erfinder: Hufenbach, Werner, D-01324 Dresden (DE); Lepper, Martin, D-01279 Dresden (DE); Werner, Jens, D-01640 Coswig (DE)

(57) **Zusammenfassung**

Die Erfindung betrifft ein Schneidwerkzeug (1) zum maschinellen Bohren oder Drehen mit einem längserstreckten Schaft (2), an welchem einen Endes ein Schneidkopf (6) zur Aufnahme des Schneidmittels (7) angeordnet ist und dessen anderes Ende in einen Werkzeughalter einer Werkzeugmaschine einspannbar ist, wobei der Schaft (2) einen längserstreckten Schaftkern (4) aus einem kohlenstofffaserverstärkten Kunststoff und eine den Schaftkern umgebende Schafthülse (3) aus einem anderen Material aufweist, wobei der Schaftkern (4) zur Kraftübertragung mittels einer Presspassung kraftschlüssig mit der Schafthülse (3) verbunden ist, wobei die Presspassung eine Druckspannung auf den Schaftkern (4) und die Schafthülse (3) aufbringt.

## Beschreibung

Die Erfindung betrifft ein Schneidwerkzeug zum maschinellen Bohren oder Drehen mit einem längserstreckten Schaft, an welchem einen Endes ein Schneidkopf zur Aufnahme des Schneidmittels angeordnet ist und dessen anderes Ende in einen Werkzeughalter einer Werkzeugmaschine einspannbar ist, wobei der Schaft einen längserstreckten Schaftkern und eine den Schaftkern umgebende Schafthülse aufweist.

Die Erfindung betrifft auch ein Verfahren zur Herstellung eines solchen Schneidwerkzeugs.

Mit derartigen Schneidwerkzeuge werden in Bohr- oder Drehmaschinen eingesetzt, um bevorzugt Liefe Löcher oder lange Hinterschnitte in Werkstücke zu bohren, drehen oder schneiden. Diese Arbeiten sind jedoch sehr schwierig, da sich das schlanke Schneidwerkzeug mit größer werdender Kraftübertragung leicht biegt, schwingt oder zu flattern beginnt. Die Durchbiegung des Schneidwerkzeuges verursacht Maßungenauigkeiten am bearbeiteten Werkstück, das Schwingen und Flattern des Schneidwerkzeuges erzeugt Oberflächenmarkierungen (so genannte Rattormarken), welche die Oberflächenrauheit der bearbeiteten Flächen unerwünscht erhöht. Je länger die Bohrstange oder der Drehmeißel ist, umso größer werden die Einflüsse der Biegung und Schwingungen, die zu ungenauen Schnittergebnissen mit hoher Oberflächenrauheit führen.

Im Stand der Technik gibt es Bestrebungen, diese Nachteile bei Schneidwerkzeugen dieser Art zu mindern.

Aus der Druckschrift EP 0094557 A1 ist ein Bohrwerkzeug und eine Methode zur Reduzierung von Schwingungen bekannt. Das Bohrwerkzeug umfasst eine Bohrstange mit einer zentrischen Bohrung und einem Bohrkopf mit den Schneidmitteln. In der Bohrung ist eine Absorbereinheit zur Beseitigung der Schwingungen des Bohrwerkzeuges integriert. Die Absorbereinheit umfasst einen geschlossenen zylindrischen Behälter, der eine Absorbermasse aus hochdichten Material, wie Wolfram oder ein Wolfram-Gemisch, und beidseitige Elastomer-Auflagen enthält.

Nachteilig an der Lösung ist, dass durch die Integration des Dämpfungselements der Querschnitt der Bohrstange selbst erhebLich geschwächt wird, so dass die Stelfigkeit und Festigkeit der Bohrstange gemindert wird, mit der Folge, dass zusätzliche Schwingungen erzeugt werden. Hiermit werden die beschriebenen Nachteile der Schneidwerkzeuge nicht beseitigt.

Die Druckschrift US 6076999 A beschreibt eine Bohrstange, ein Verfahren für die Herstellung einer Bohrstange und die Verwendung einer solchen Bohrstange zum Dämpfen von Vibrationen während des Drehens. Die Bohrstange weist einen Schaftabschnitt mit einer konischen Ausnehmung auf, in den ein Schneidkopf mit einem passenden konischen Vorsprung eingefügt ist. Als wesentliche Maßnahme zur Schwingungsdämpfung sind diese Teile durch eine Haftverbindung miteinander gefügt, wobei als Klebemittel verschiedene harte oder elastische Kleber verwendet werden. Die Schichtdicke dieser Haftverbindung beträgt bis zu 0.8 Millimeter.

in einer Ausführungsform umfasst der Schaftabschnitt der Bohrstange eine außenliegende Rohrhülse, die einen konzentrischen Kern umgibt. Das Hülsenteil und der Kern sind über eine weitere Haftverbindung, welche ebenfalls als Vibrationsdämpfung dient, miteinander verbunden. Die Schichtdicke dieser Haftverbindung kann bis zu 1.5 Millimeter betragen, wobei hier als Haftmittel verschiedene Gummikleber verwendet werden.

Die Dämpfungswirkung wird nach dieser Lösung durch die Schereffekte der Klebeverbindungen zwischen den Elementen der Bohrstange erzeugt, wobei besonders dicke und elastische Klebeschichten den Dämpfungseffekt erhöhen. Allerdings wird gleichzeitig die Festigkeit der Haftverbindung und damit die Gesamtfestigkeit der Bohrstange mit genannter Folge gemindert.

Die elastische Klebeschicht zwischen dem Hülsenteil und dem Kern führt zudem dazu, dass der Kern nicht ausreichend bei der Kraftübertragung mitwirken kann und somit die Verklebung die Steifigkeit und Festigkeit der Bohrstange besonders negativ beeinflusst. Wird alternativ ein härterer Kleber verwendet, wird die Riegesteifigkeit zwar verbessert, dagogon aber die gewellte Dämpfungswirkung aufgehoben.

Der Erfindung liegt die Aufgabe zugrunde, ein Schneidwerkzeug zum maschinellen Bohren oder Drehen und ein Verfahren zu dessen Herstellung bereitzustellen, welches die Nachteile des Standes der Technik beseitigt, insbesondere ein verbessertes Schneidverhalten des Schneidwerkzeuges gewährleistet.

Die Aufgabe wird erfindungsgemäß mit einem Schneidwerkzeug gelöst, bei dem der Schaftkern aus einem kohlenstofffaserverstärktem Kunststoff besteht und fest mit der Schafthülse verbunden ist.

Dabei geht die Erfindung davon aus, dass für die Eigenschaften eines Schneidwerkzeuges zwei Materialparameter von entscheidender Bedeutung sind, nämlich die Steifigkeit des verwendeten Materials, respektive dessen Elastizitätsmodul (E-Modul), und die Werkstoffdämpfung des Materials (Fähigkeit der Dämpfung mechanischer Schwingung). Je höher die Steifigkeit des Materials, desto höher die Maßgenauigkeit des bearbeiteten Werkstückes. Je höher die Werkstoffdämpfung, desto schneller werden störende Schwingungen abgebaut, was die Oberflächenrauheit des bearbeiteten Werkstückes mindert.

Die bekanntermaßen verwendeten Werkstoffe für das Schneidwerkzeug, wie z.B. Stahl oder Stahllegierungen, haben zwar eine bohe Steifigkeit mit einem E-Modul von ca. 210 CPA, aber eine geringe Werkstoffdämpfung. Gleiches trifft auf die für hochwertige Schneidwerkzeuge verwendeten Werkstoffe Wolfram oder Wolframcarbid zu, die eine besonders hohe Steifigkeit mit einem E-Modul von ca. 410 GPa aufweisen, aber demgegenüber eine sehr geringe bis geringe Werkstoffdämpfung bieten.

Im Vergleich dazu erfüllen kohlenstofffaserverstärkte Faserverbundwerkstoffe (CFK) beide Materialparameter. So besitzen die in Matrixmaterial eingebetteten Kohlenstofffasern sowohl eine bohe Steifigkeit als auch eine sehr gute Werkstoffdämpfung, die um ein Vielfaches höher ist als die von Stahl oder Woffram.

Bei der erfindungsgemäßen Lösung wird die erstrebte Schwingungsdämpfung bei zugleich hoher Steifigkeit durch die Werkstoffeigenschaften der Materialkombination erreicht. Auf besondere Dämpfungsbauelemente, die nicht zur Tragfähigkeit des Schneidwerkzeuges beitragen und den tragfähigen Bauraum des Schneidwerkzeuges schwächen, kann zugunsten eines vollen Materialeinsatz mit dein vorteilhaften Material verzichtet werden. Im Ergebnis wird ein konstruktiv einfacheres aber qualitativ verbessertes Schneidwerkzeug erzielt.

Die z.B. mit einem Strukturkleber erzeugte feste Verbindung zwischen der Schafthülle und dem Schaftkern, überträgt die beim Bearbeiten des Werkstückes auftretenden Biegelasten und mechanischen Schwingungen vom Schaft direkt auf den Schaft kern und leitet die ebenfalls auftretenden Torsionslasten direkt auf das Schaftende ab. Die Biegelasten und Schwingungen werden von dem CFK infolge der vorbeschriebenen Eigenschaften bestmöglich kompensiert, wogegen die Torsionslasten hauptsächlich von der Schafthülse getragen werden, die aus einem anderen Material als CFK, vorzugsweise aus einem der herkömmlich verwendeten Werkzeugmaterialien besteht. Außerdem dient die Schafthülse aus einem anderen Material dem mechanischen Schutz des Kohlenfaserverbundwerkstoffes im Schaftkern.

Besteht die Schafthülse vorteilhafter Weise aus einem hartmetallischem Material, weist die Schafthülse dadurch eine besonders harte und kratzfeste Oberfläche auf, die einen soliden Schutz vor der Späne-Abrasion in tiefen Bohrlöchern bietet und damit eine besonders hohe Verschleißfestigkeit des Schneidwerkzeugs gewährleistet.

Mit diesen Kombinationen der Materialien und deren Anordnung am Schneidwerkzeug werden die Schnittergebnisse beim Bohren, Schneiden oder Drehen von Werkstücken maßgeblich verbessert, insbesondere wird eine hohe Maßgenauigkeit und geringe Oberflächenrauheit erzielt. Entsprechend der einsatzspezifischen Anforderungen an das Schneidwerkzeug kann der Durchmesser des Schaftkerns und die Wandstärke der Schafthülse im Verhältnis zueinander variiert werden.

In einer vorteilhaften Ausführungsform der Erfindung ist eine Außenkontur des Schaftkerns formbündig korrespondierend zu einer Innenkontur der Schafthülse ausgebildet. Damit wird ein größtmöglicher Flächenkontakt an korrespondierenden Flächen des Schaftkerns und der Schafthülse zur Übertragung der mechanischen Lasten bereitgestellt und damit die feste Verbindung zwischen dem Schaftkern und die Schafthülse besonders wirksam gemacht.

Bei einer weiteren vorteilhaften Ausführungsform ist der Schaftkern mittels eines Matrixmaterials des Faservenbundwerkstoffes des Schaftkerns mit der Schafthülse verbunden. Damit wird ein vollständiger Stoffanschluss von gleichartigem Werkstoff des Schaftkerns an die Schafthülse geschaffen, was die unmittelbare mechanische Verbindung zwischen der Schafthülse und dem Schaftkern weiter verbessert.

In einer besonders vorteilhaften Ausführung sind der Schaft kern und die Schafthülse miteinander kraftschlüssig, vorzugsweise mittels einer Presspassung, verbunden. Dazu kann beispielsweise die Außenkontur des Schaftkerns ein Übermaß über das Innenmaß der korrespondierenden Innenkontur der Schafthülse aufweisen. Hierbei entsteht beim Zusammenfügen eine besonders feste Verbindung. Außerdem erhöht die durch die Presspassung auf den Schaftkern und die Schafthülse aufgebrachte Druckspannung zusätzlich die Steifigkeit des Schneidwerkzeuges.

Nach einer bevorzugten Ausgestaltung des Schneidwerkzeuges sind die Kohlenstofffasern des Faserverbundwerkstoffes unidirektional, im Wesentlichen in Richtung einer Längsachse des Schneidwerkzeugen angeordnet und vollständig über die Länge des Schaftkernes erstreckt. Bei dieser Ausgestaltung sind die Kohlenstofffasern kraftflussgerecht für die Aufnahme der anstehenden Beigebelastungen angeordnet, wodurch die Biegesteifigkeit des Schneidwerkzeuges erheblich erhöht wird. Außerdem erlaubt die unidirektionale Anordnung der Fasern eine sehr hohe Faserverdichtung.

Da die Schafthülse die Aufnahme der Torsionsbelastung übernimmt, kann im Übrigen auf eine winklig zur Schneidwerkzeuglängsachse gerichtete Faseranordnung verzichtet werden und das gesamte Volumen des Schaftkernes komplett mit längs zur Schneidwerkzeuglängsachse angeordneten Fasern ausgestattet werden. Dadurch wird eine hohe Faserkonzentration zum Zwecke der Biegelastkompensation bereitgestellt.

Enthält der Faserverbundwerkstoff hochmodulige Kohlenstofffasern mit einem Elastizitätsmodul von wenigstens 300 GPa, wird eine derart hohe Steifigkeit des Schaftkerns erreicht, die mindestens der von Stahl entspricht und die von Wolfram übertreffen kann. Als Kohlenstofffasern mit derartigen Eigenschaften können beispielsweise Pech-basierte Kohlenstofffasern und/oder Polyacrylnitril(PAN)-basierte Kohlenstofffasern verwendet werden.

Die Kernsteifigkeit wird um ein Weiteres erhöht, wenn der Gehalt der Kohlenstofffasern im Faserverbundwerkstoff 70 bis 90 % beträgt. Dieser Cchalt an Kohlenstofffasern liefert eine Faserdichte, die eine besonders hohe Steifigkeit des Schaftkerns erzeugt, wobei der für das Matrixmaterial verbleibende Volumenprozentsatz eine ausreichende Festigkeit des Faserverbundwerkstoffes sichert.

Vorteilhafter Weise besteht die Schafthülse aus Wolfram oder Wolframcarbid, da dieses Material eine besonders hohe Steifigkeit mit einem E-Modul von ca. 410 GPa aufweist und somit die Gesamtsteifigkeit des Schneidwerkzeuges erhöht.

Für die Zuführung eines Kühlmittels zum Kühlen des Schneidmittels können der Schaftkern und/oder die Schafthülse einen längserstreckten Kanal aufweisen. Dieser Kanal kann sowohl in das CFK-Material des Schaftkerns als auch in das hartmetallische Material der Schaftbülse eingearbeitet sein.

Bei einer vorteilhaften Ausführungsform weist der Schaft eine separate Werkzeugaufnahme auf, die mit der Schafthülse verbunden ist. Eine derartige konstruktive Ausführung des Schaftes ermöglicht einen individuellen, funktionsgerechten Materialeinsatz und minimiert die Aufwendungen für die Herstellung des Schaftes, insbesondere der hohlzylindrischen Schafthülse, die dann aus Rohrmeterware gefertigt werden kann. Die separat gefertigte Werkzeugaufnahme kann durch z.B. Längspressen, Aufschrumpfen, Löten oder Schweißen mit der hohlzylindrischen Schafthülse verbunden werden.

Die Aufgabe wird außerdem durch ein Verfahren gelöst, bei dem der Schaftkern aus einem kohlenstofffaserverstärktem Kunststoff gefertigt und fest in die aus einem hartmetallischen Material vorgefertigte Schafthülse eingefügt wird. Mit diesem Verfahren wird ein Schneidwerkzeug mit den vorbeschriebenen vorteilhaften Eigenschaften hergestellt. Die Herstellung des Schaftkerns und der Schafthülle erfolgt in preiswerten, separaten Verfahrensschnitten, so dass die Gesamtkosten der Herstellung des mehrteiligen Schneidwerkzeuges im Verhältnis zur herkömmlichen monolitischen Herstellung gering sind.

In einer vorteilhaften Ausführung des Verfahrens wird der Schaftkern durch Längspressen und/oder durch Schrumpfpressen mit der Schafthülse verbunden. Hiermit kann die vorteilhafte kraftschlüssige Presspassung zwischen der Schafthülse und dem Schaftkern hergestellt werden, welche eine festigkeitssteigernde Druckspannung im fertiggestellten Schneidwerkzeug erzeugt. Beim Langspressen wird ein mit Übermaß über das Innenmaß der Innenkontur der Schafthülse gefertigter Schaftkern mit einer längsgerichteten mechanischer Kraft in die Schafthülse eingepresst. Beim Schrumpfpressen wird die Schafthülse thermisch geweitet, bevor der übermaßig gefertigte Schaftkern eingefügt wird. Während des Auskühlens schrumpft die Schafthülse und erzeugt eine radiale Druckspannung in der Fügung zum Schaftkern.

In einer bevorzugten Ausgestaltung des Verfahrens wird zur Ausbildung des Schaftkerns eine Preform des Schaftkerns durch Formpressen des kohlenstofffaserverstärktem Kunststoffs in einem die Außenkontur des Schaftkerns abbildenden Formwerkzeug geformt und anschließend zu einem Faserverbundwerkstück konsolidiert. Der Faserverbundwerkstoff wird beim Pressen verdichtet und beim Konsolidieren, z.B. durch Verschmelzen, gehärtet. Somit kann ein zur Innenkontur der Schafthülse korrespondierend geformter Schaftkern von hoher Festigkeit und Steifigkeit erzielt werden.

Zweckmäßiger Weise wird eine dem gewünschten Fasergehalt des Schaftkernes entsprechende Menge an Kohlenstofffasern, welche über die Länge des Formwerkzeuges erstreckt angeordnet sind, mit einem Matrixmaterial in ein Grundformwerkzeug eingebracht und mittels eines Gegenformwerkzeuges und unter Ausübung einer Presskraft zur Preform des Schaftkernes geformt. Dabei werden die Fasern in unidirektionaler Anordnung zueinander verpresst, wobei die Presskraft im Wesentlichen senkrecht zur Ausrichtung der Kohlenstofffasern im Formwerkzeug wirkt. Somit können die Fasern besonders dicht komprimiert werden und das überschüssige Matrixmaterial kann leicht aus dem Formwerkzeug austreten.

Die Packungsdichte der Kohlenstofffasern kann weiter erhöht werden, wenn beim Formpressen des Faserverbundwerkstoffes eine Ultraschall-Behandlung der Kohlenstofffasern erfolgt, bei der die Kohlenstofffasern infolge des Nesting-Effekts zusammenrut schen.

Werden die Kohlenstofffasern vor dem Einbringen in das Formwerkzeug mit dem Matrixmaterial getränkt, wird eine homogene Verteilung des Matrixmaterials erreicht und beim Formpressen ein geringer Überschuss an Matrixmaterial verursacht. Das sorgt nicht nur fur ein Materialersparnis an Matrixmaterial sondern verbessert zusätzlich die festigkeitsrelevanten Stoffeigenschaften des Faserverbundmaterials.

Werden die Kohlenstofffasern als endloses Strangmaterial vorgefertigt und auf die Länge des Formwerkzeuges zugeschnitten, kann die Verarbeitung der Kohlenstofffasern nahezu verschnittfrei und damit kostensparend erfolgen.

In einer bevorzugten Ausführungsform wird der Schaftkern aus mehreren Formteilen, vorzugsweise aus in Längserstreckung des Schaftkernes segmentierten Formteilen, gebildet. Damit ist es möglich, Formteile verschiedener Beschaffenheit (z.B. Faserdichte, Faserrichtung, Matrixmaterial) miteinander in einem Schaftkern zu kombinieren. Sind die Formteile in Längserstreckung des Schaftkernes segmentiert, wird hierdurch die vorteilhafte Faserlage in Richtung der Längsachse des Schneidwerkzeuges nicht gestört. Außerdem kann mit geringem Aufwand eine längserstreckte Materialader oder eine Materialausnehmung, wie z.B. ein Kühlmittelkanal, in den Schaftkern eingearbeitet werden.

In analoger zweckmäßiger Verfahrensweise zur Fertigung des Schaftkerns kann zur Ausbildung eines Formteils des Schaftkernes eine Preform des Formteils durch Formpressen des kohlenstofffaserverstärktem Kunststoffs in einem die Außenkontur des Formteils abbildenden Formwerkzeug geformt und anschließend zu einem Faserverbundwerkstück konsolidiert werden. Umfasst die Außenkontur des Formteils einen Teil der Außenkontur des Schaftkerns, kann für die Herstellung des Formteils kostensparend das Formwerkzeugs zur Herstellung des einteiligen Schaftkerns teilweise wieder verwendet werden.

Werden die Formteile des Schaftkernes mit einer zueinander identischen Geometrie ausgebildet, kann für jedes der Formteile kostensparend dasselbe Formwerkzeug verwendet werden.

Vorzugsweise sind die Formteile oder die Preformen der Formteile des Schaftkernes mittels des Matrixmaterials miteinander verklebt. Damit wird ein zusammengesetzter Schaftkern mit vollständig gleichartigem Werkstoff gebildet, so dass das Kernraumpotential zur Einbringung des Werkstoffes, welches die für das Schneidwerkzeug vorteilhaften Biegesteifigkeit und Dämpfungseigenschaften aufweist, trotz Teilung des Schaftkerns ausgeschopft wird.

Das erfindungsgemäße Schneidwerkzeug und das erfindungsgemäße Verfahren zu seiner Herstellung werden nachfolgend an zwei Ausführungsbeispielen näher erläutert. Die zugehörigen Zeichnungen zeigen in einer schematischen Darstellung in
- Fig. 1: eine Schnittdarstellung des erfindungsgemäßen Schneidwerkzeugs in einer ersten Ausführungsform,
- Fig. 2: eine Schnittdarstellung des erfindungsgemäßen Schneidwerkzeugs in einer zweiten Ausführungsform,
- Fig. 3: isometrische Darstellung des Schneidwerkzeuges nach Fig. 2,
- Fig. 4: isometrische Darstellung eines zylindrischen Schaftkerns des Schneidwerkzeuges nach Fig. 2,
- Fig. 5: isometrische Darstellung eines halbzylindrischen Formteils des Schaftkerns nach Fig. 4,
- Fig. 6: isometrische Darstellung des unteren Formwerkzeugs zur Herstellung des Schaftkerns nach Fig. 1 oder Fig. 2,
- Fig. 7: isometrische Darstellung des oberen Formwerkzeugs zur Herstellung des Schaftkerns nach Fig. 1,
- Fig. 8: isometrische Darstellung des oberen Formwerkzeugs zur Herstellung des Schaftkerns nach Fig. 4.

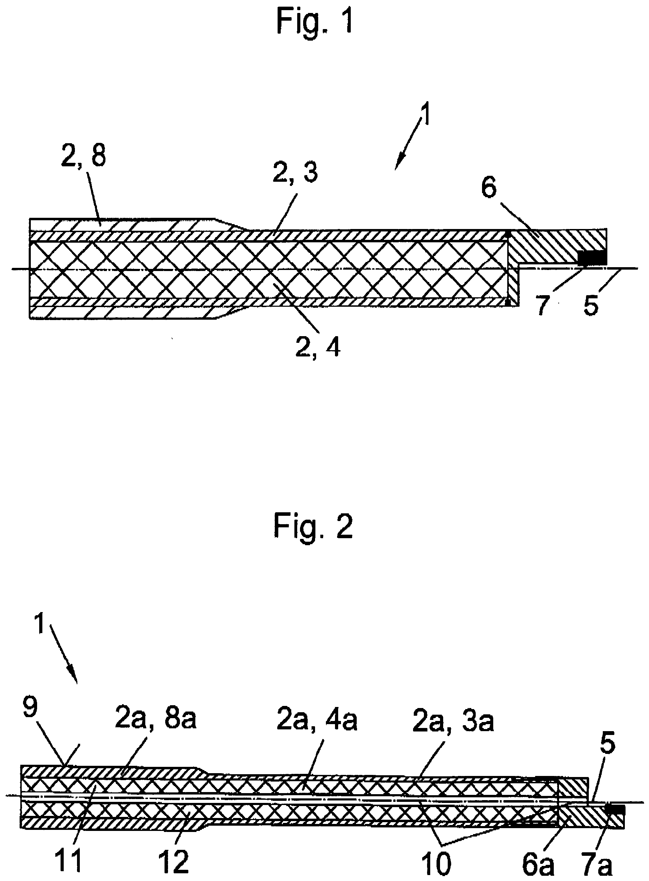

Fig. 1 zeigt in einer ersten Ausführungsform der Erfindung ein Schneidwerkzeug 1 mit einem mehrteiligen Schaft 2, welcher eine Schafthülse 3 aus einem dünnwandigen Präzisionsstahlrohr und einen zur Innenform der Schafthülse 3 korrespondierend ausgebildeten vollzylindrischen Schaftkern 4 aus Kohlenfaserverbundwerkstoff aufweist, wobei der Schaftkern 4 zentrisch zur Längsachse 5 des Schneidwerkzeuges 1 angeordnet ist. Der Schaftkern 4 wird separat gefertigt und anschließend in die Schafthülse 3 eingefügt.

Am vorderen Ende des Schaftes 2 ist ein Schneidkopf 6 zur Aufnahme einer Schneidplatte 7 angeordnet. Der Schneidkopf 6 besteht aus Stahl und ist mittels einer Schweißnaht fest mit der Schafthulse 3 aus Stahlrohr verbunden. Alternativ kann der Schneidkopf 6 auch mit der Schafthülse 3 verlötet oder verklebt werden. Der Schaft 2 weist außerdem am hinteren Ende eine speziell gefertigte Werkzeugaufnahme 0 aus Stahl auf, die auf die Schafthülse 3 aufgeschrumpft ist.

Für einen vollständig bündigen Formschluss zwischen Schafthülse 3 und Schaftkern 4, korrespondieren die Außenform und die Außenabmessungen des gefertigten Schaftkerns 4 (hier der Außendurchmesser des zylindrischen Schaftkerns 4) mit der Innenform und der Innenabmessung der gefertigten Schafthülse 3 (hier der Innendurchmesser der rohrartigen Schafthülse 3). Zur Erzeugung einer zusätzlichen Presspassung weist der Außendurchmesser des Schaftkernes 4 ein geringes Übermaß gegenüber dem Innendurchmesser der Schafthülse 3 auf. Der Schaftkern 4
wird sodann unter axial gerichteter mechanischer Krafteinwirkung in die Schafthülse 3 eingepresst.

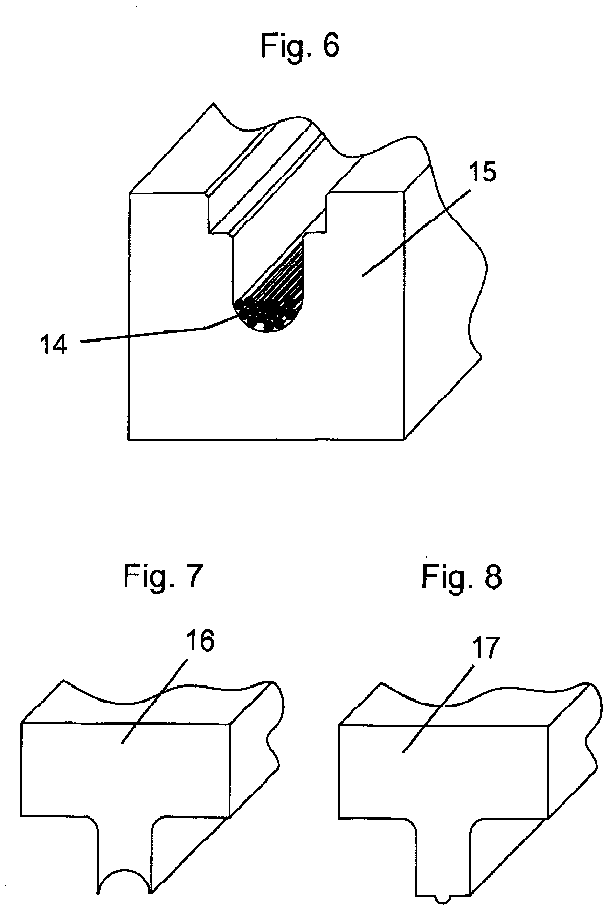

Der Schaftkern 4 aus Kohlenfaserverbundwerkstoff umfasst hochmodulige Kohlenstofffasern, wie zum Beispiel pechbasierte Kohlenstofffasern mit einem E-Modul von ca. 900 GPa, eingebettet in einem Matrixmaterial. Eine vorteilhafte Ausführung der Fertigung des Schaftkerns 4 wird nachstehend anhand der Figuren 6 bis 8 erläutert.

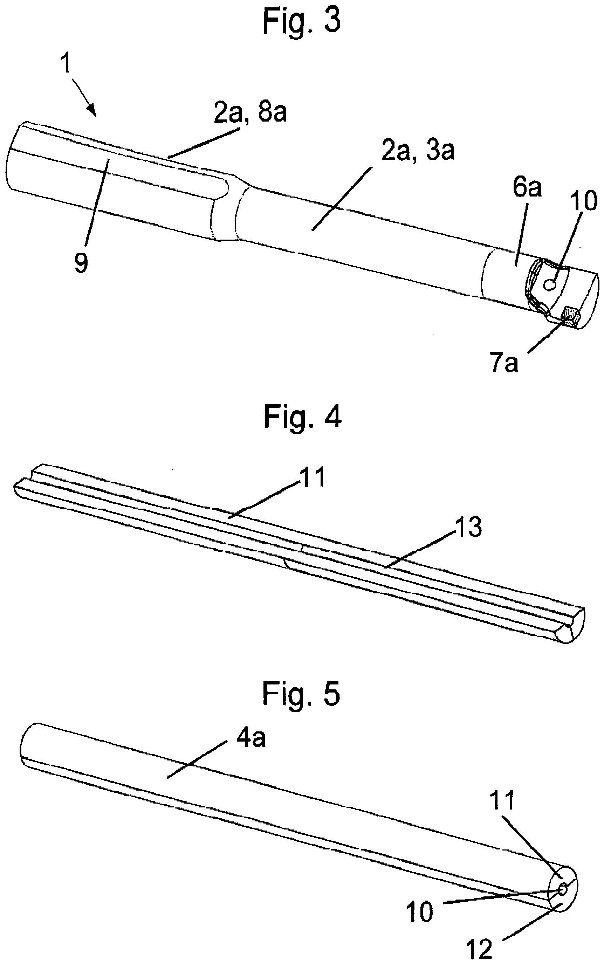

Aus Fig. 2 und Fig. 3 ist eine alternative Ausführungsform des erfindungsgemäßen Schneidwerkzeugs als Schneidwerkzeug 1a ersichtlich. Identische Bauteile erhalten dieselben Bezugszeichen. Im Unterschied zur Ausführung nach Fig. 1 weist das Schneidwerkzeug 1a einerseits einen Schaft 2a mit einer Schafthülse 3a aus Wolfram aus, an der am hinteren Ende eine integrale Werkzeugaufnahme 8a ausgebildet ist. Wie gut aus Fig. 3 ersichtlich ist, weist die Schafthülse 3a im Bereich der Werkzeugaufnahme 8a einen vergrößerten Außendurchmesser auf, auf dem eine Spannebene 9 ausgebildet ist.

Am vorderen Ende des Schaftes 2a ist ein Schneidkopf 6a aus Stahl mittels einer Steck- Schrumpfverbindung mit der Schafthülse 3a verbunden, so dass alternativ zur Ausführung nach Fig. 1 eine ebenfalls stabile, kraftschlüssige Verbindung zwischen dem Schneidkopf und der Schafthülse realisiert ist. Außerdem weist der Schaftkern 4a, wie auch der Schneidkopf 6a, einen zentrisch angeordneten, durchgängigen Kanal 10 zur Zuleitung des Kühlmittels an die Scheidplatte 7 auf.

Dieser Schaftkern 4a ist ebenfalls, wie vorstehend im ersten Ausführungsbeispiel beschrieben, aus Kohlenfaserverbundwerkstoff gefertigt und anschließend in die Schafthülse 3a eingepresst. Zur fertigungsgünstigen Ausbildung des Kühlmittelkanals 10 im Kohlenfaserverbundwerkstoff des Schaftkerns 4a nach der Ausführung in Fig. 2, besteht dieser aus zwei einzeln gefertigten halbzylindrischen Formteilen 11, 12, in die jeweils eine längserstreckte Sicke 13 eingearbeitet ist. Zusammengefügt bilden sie den mit der Schafthülse 3a korrespondierenden hohl zylindrischen Schaftkern 4a. In Fig. 4 ist das untere halbzylindrische Formteil 11 der zueinander identisch ausgebildeten Formteile 11, 12 dargestellt und in Fig. 5 ist der aus beiden Formteilen 11, 12 zusammengefügte Schaftkern 4a mit dem integrierten Kühlmittelkanal 10 ersichtlich.

Die Fertigung der einzelnen Formteile 11, 12 des hohlzylindrischen Schaftkerns 4a nach Fig. 4 wird ebenfalls anhand der Fig. 6 bis 8 erläutert.

Zur Herstellung des zylindrischen Schaftkerns 4 aus Faserverbundwerkstoffes nach Fig. 1 werden zunächst die hochmodulige Kohlenstofffasern 14 mit dem Matrixmaterial, wie z.B. einem Reaktionsharz, getränkt. Die getränkten Kohlenstofffasern 14 werden gestreckt und in ein die Außenkontur des Schaftkernes 4 teilweise abbildenden Matrize 15 (unteres Formwerkzeug 15 mit einer halbzylindrischen Ausnehmung nach Fig. 6) eingelegt, wobei die Kohlenstofffasern 14 in Richtung der vorgesehenen Längsachse 5 des Schneidwerkzeuges 1 - und damit längs des Formwerkzeuges 15 orientiert werden. Es werden soviel getränkte Fasern 14 eingelegt, dass nach dem formpressen der Faserverbundwerkstoff des Schaftkerns 4 einen Faservolumengehalt von ca. 70 bis 90% aufweist. Mit Hilfe eines Stempels 16 nach Fig. 7, der den übrigen Teil der Außenkontur des Schaftkernes 4 abbildet (oberes Formwerkzeug 16 mit einer halbzylindrischen Ausnehmung), werden die Fasern 14 verpresst und zu einer zylindrischen Preform (nicht dargestellt)geformt. Überflüssiges Reaktionsharz wird dabei aus dem Formwerkzeug 15, 16 herausgedrückt. Anschließend wird die Preform zum festen Faserverbundwerksstück konsolidiert, indem durch Wärmezufuhr das Reaktionsharz ausgehärtet wird. Der fertiggestellte Schaftkern 4 wird aus dem Formwerkzeug 15, 16 entformt und wie vorstehend erläutert in die Schafthülse 3 eingefügt.

Vorzugsweise wird ein Formwerkzeug 15, 16 verwendet, dass ein Vielfaches der Länge eines Schaftkerns 4 aufweist (nicht dargestellt). Der auf diese Weise gepresste Kern-Rohling aus Faserverbundwerkstoff wird anschließend exakt auf die gewünschte Länge des Schaftkerns 4 geteilt. Dadurch kann die Produktionsrate erhöht und Materialverschnitt minimiert werden.

Zur Herstellung der halbzylindrischen Formteile 11, 12 des Schaftkernes 4a nach Fig. 4 wird, abweichend zu der vorstehend erläuterten Herstellung des Schaftkerns 4, die für ein Formteil 11 entsprechende Menge an getränkten Kohlenstofffasern 14 in die Matrize 15 nach Fig. 6 eingelegt und anstelle des Stempels 16 nach Fig. 7 ein Stempel 17 nach Fig. 8 zum Formpressen verwendet. Dieser Stempel 17 weist eine entlang der gedachten Längsachse 5 des Schneidwerkzeuges 1 erstreckte Wölbung auf (oberes Formwerkzeug 17 mit einem halbzylindrischen Vorsprung). Hiermit werden die Fasern 14 verpresst und zu einer halbzylindrischen Preform des Formteils 11 geformt, das ein längserstreckte Sicke 13 aufweist (vgl. Fig. 4). Das anschließend konsolidierte Formteil 11 wird aus dem Formwerkzeug 15, 17 entformt und auf gleiche Weise das zweite halbzylindrischen Formteil 12 mittels desselben Formwerkzeuges 15, 17 hergestellt. Beide Formteile 11, 12 werden mit dem Reaktionsharz zu dem hohlzylindrischen Schaftkern 4a nach Fig. 5 verklebt, welcher anschließend analog des Schaftkernes 4 nach Fig. 1 unter Kratteinwirkung in die Schafthülse 3a eingepresst wird.

### Bezugszeichenliste

- 1: Schneidwerkzeug
- 2: Schaft
- 3: Schafthülse
- 4: Schaftkern
- 5: Längsachse des Schneidwerkzeuges
- 6: Schneidkopf
- 7: Schneidplatte
- 8: Werkzeugaufnahme
- 9: Spannebene
- 10: Kanal, Kühlmittelkanal
- 11: Formteil
- 12: Formteil
- 13: Sicke
- 14: Kohlenstofffaser
- 15: Matrize, unteres Formwerkzeug, Grundformwerkzeug
- 16: Stempel, oberes Formwerkzeug, Gegenformwerkzeug
- 17: Stempel, oberes Formwerkzeug, Gegenformwerkzeug

## Patentansprüche

1. Schneidwerkzeug (1) zum maschinellen Bohren oder Drehen mit einem längserstreckten Schaft (2, 2a), an welchem einen Endes ein Schneidkopf (6, 6a) zur Aufnahme des Schneidmittels (7, 7a) angeordnet ist und welcher anderen Endes in einen Werkzeughalter einer Werkzeugmaschine einspannbar ist, wobei der Schaft (2, 2a) einen längserstreckten Schaftkern (4, 4a) aus einem kohlenstofffaserverstärkten Kunststoff und eine den Schaftkern (4, 4a) umgebende Schafthülse (3, 3a) aus einem anderen Material aufweist, wobei der Schaftkern (4, 4a) zur Kraftübertragung mittels einer Presspassung kraftschlüssig mit der Schafthülse (3, 3a) verbunden ist, wobei die Presspassung eine Druckspannung auf den Schaftkern (4, 4a) und die Schafthülse (3, 3a) aufbringt.

2. Schneidwerkzeug nach Anspruch 1, **dadurch gekennzeichnet, dass** die Kohlenstofffasern (14) des Faserverbundwerkstoffes im Wesentlichen in Richtung einer Längsachse (5) des Schneidwerkzeuges (1) angeordnet sind.

3. Schneidwerkzeug nach Anspruch 1 oder 2, **dadurch gekennzeichnet, dass** der Schneidkopf (6, 6a) fest mit der Schafthülse (3, 3a) verbunden ist.

4. Schneidwerkzeug nach einem der vorstehenden Ansprüche, **dadurch gekennzeichnet, dass** die Schafthülse (3, 3a) aus einem hartmetallischen Material besteht.

5. Schneidwerkzeug nach einem der vorstehenden Ansprüche, **dadurch gekennzeichnet, dass** eine Außenkontur des Schaftkerns (4, 4a) formbündig korrespondierend zu einer Innenkontur der Schafthülse (3, 3a) ausgebildet ist.

6. Schneidwerkzeug nach einem der vorstehenden Ansprüche, **dadurch gekennzeichnet, dass** der Schaftkern (4, 4a) mittels eines Matrixmaterials des Faserverbundwerkstoffes des Schaftkerns (4, 4a) mit der Schafthülse (3, 3a) verbunden ist.

7. Schneidwerkzeug nach einem der vorstehenden Ansprüche, **dadurch gekennzeichnet, dass** eine separate Werkzeugaufnahme (8) mit der Schafthülse (3) verbunden ist oder eine integrale Werkzeugaufnahme (8a) an der Schafthülse (3, 3a) ausgebildet ist.

8. Schneidwerkzeug nach Anspruch 7, **dadurch gekennzeichnet, dass** die Schafthülse (3a) im Bereich der integralen Werkzeugaufnahme (8a) einen vergrößerten Außendurchmesser aufweist, auf dem eine Spannebene (9)ausgebildet ist.

9. Schneidwerkzeug nach einem der vorstehenden Ansprüche, **dadurch gekennzeichnet, dass** die Kohlenstofffasern (14) des Faserverbundwerkstoffes unidirektional angeordnet sind.

10. Schneidwerkzeug nach einem der vorstehenden Ansprüche, **dadurch gekennzeichnet, dass** die Kohlenstofffasern (14) des Faserverbundwerkstoffes vollständig über die Länge des Schaftkernes (4, 4a) erstreckt angeordnet sind.

11. Schneidwerkzeug nach einem der vorstehenden Ansprüche, **dadurch gekennzeichnet, dass** der Faserverbundwerkstoff hochmodulige Kohlenstofffasern (14) mit einem Elastizitätsmodul von wenigstens 300 GPa, vorzugsweise Pech-basierte Kohlenstofffasern und/oder Polyacrylnitril(PAN)-basierte Kohlenstofffasern, enthält.

12. Schneidwerkzeug nach einem der vorstehenden Ansprüche, **dadurch gekennzeichnet, dass** der Faservolumengehalt der Kohlenstofffasern (14) im Faserverbundwerkstoff 70 bis 90 % beträgt.

13. Schneidwerkzeug nach einem der vorstehenden Ansprüche, **dadurch gekennzeichnet, dass** die Schafthülse (3, 3a) aus Wolfram oder Wolframcarbid besteht.

14. Schneidwerkzeug nach einem der vorstehenden Ansprüche, **dadurch gekennzeichnet, dass** der Schaftkern (4a) und/oder die Schafthülse (3a) einen längserstreckten Kanal (10) aufweist.

15. Verfahren zur Herstellung eines Schneidwerkzeugs (1) nach einem der vorstehenden Ansprüche, bei dem ein Schaft (2, 2a) aus einen längserstreckten Schaftkern (4, 4a) und eine den Schaftkern (4, 4a) umgebende Schafthülse (3, 3a) gebildet wird, wobei der Schaftkern (4, 4a) aus einem kohlenstofffaserverstärkten Kunststoff und die Schafthülse (3, 3a) aus einem anderen Material vorgefertigt wird und der Schaftkern (4, 4a) mittels einer druckspannungserzeugenden Presspassung kraftschlüssig in die vorgefertigte Schafthülse (3, 3a) eingefügt wird.

16. Verfahren nach Anspruch 15, **dadurch gekennzeichnet*,* dass** der Schaftkern (4, 4a) durch Längspressen und/oder durch Schrumpfpressen mit der Schafthülse (3, 3a) verbunden wird.

17. Verfahren nach Anspruch 15 oder 16, **dadurch gekennzeichnet, dass** die separat gefertigte Werkzeugaufnahme (8) des Schaftes (2) durch Längspressen, Aufschrumpfen, Löten oder Schweißen mit der Schafthülse (3) verbunden wird.

18. Verfahren nach einem der Ansprüche 15 bis 17, **dadurch gekennzeichnet, dass** der Schneidkopf (6, 6a) durch Aufschrumpfen, Löten, Schweißen oder Kleben mit der Schafthülse (3, 3a) verbunden wird.

19. Verfahren nach einem der vorstehenden Ansprüche, **dadurch gekennzeichnet, dass** der Schaftkern (4a) aus mehreren Formteilen (11, 12), vorzugsweise aus in Längserstreckung des Schaftkernes (4a) segmentierten Formteilen (11, 12) und / oder aus Formteilen (11, 12) mit einer zueinander identischen Geometrie, gebildet wird.

20. Verfahren nach Anspruch 15 bis 19, **dadurch gekennzeichnet, dass** zur Ausbildung des Schaftkerns (4a) oder der Formteile (11, 12) des Schaftkerns (4a) eine Preform des Schaftkerns (4a) oder des Formteils (11, 12) des Schaftkerns (4a) durch Formpressen des kohlenstofffaserverstärktem Kunststoffs in einem die Außenkontur des Schaftkerns (4a) oder des Formteils (11, 12) des Schaftkerns (4a) abbildenden Formwerkzeug (15, 16) geformt und anschließend zu einem Faserverbundwerkstück konsolidiert wird.

21. Verfahren nach Anspruch 20, **dadurch gekennzeichnet, dass** eine dem Fasergehalt des Schaftkernes (4a) oder des Formteils (11, 12) entsprechende Menge an Kohlenstofffasern (14) über die Länge des Formwerkzeuges (15, 16) längserstreckt ausgerichtet mit einem Matrixmaterial in ein Grundformwerkzeug (15) eingebracht und mittels eines Gegenformwerkzeuges (16) unter Ausübung einer Presskraft zur Preform des Schaftkernes (4a) oder des Formteils (11, 12) geformt wird.

22. Verfahren nach Anspruch 20 oder 21, **dadurch gekennzeichnet, dass** beim Formpressen des Faserverbundwerkstoffes eine Ultraschall-Behandlung der Kohlenstofffasern (14) erfolgt.

23. Verfahren nach einem der Ansprüche 20 bis 22, **dadurch gekennzeichnet, dass** die Kohlenstofffasern (14) vor dem Einbringen in das Formwerkzeug (15, 16) mit dem Matrixmaterial getränkt werden.

24. Verfahren nach einem der Ansprüche 20 bis 23, **dadurch gekennzeichnet, dass** die Kohlenstofffasern (14) als endloses Strangmaterial vorgefertigt und auf die Länge des Formwerkzeuges (15, 16) zugeschnitten werden.

25. Verfahren nach einem der Ansprüche 15 bis 24, **dadurch gekennzeichnet, dass** die Kohlenstofffasern (14) in unidirektionaler Anordnung zueinander verpresst werden.

26. Verfahren nach einem der Ansprüche 19 bis 25, **dadurch gekennzeichnet, dass** die Formteile (11, 12) des Schaftkernes (4a) mittels des Matrixmaterials miteinander verklebt werden.
